# EUROPEAN PATENT APPLICATION

(11) **EP 2 578 634 A1**
(43) Date of publication of application: **10.04.2013**
(21) Application number: 11789608.4
(22) Date of filing: 17.05.2011
(51) Int. Cl.: C08L 67/04, C08K 3/22, C08K 5/29

(54) **POLYGLYCOLIC ACID-CONTAINING RESIN COMPOSITION WITH IMPROVED WATER RESISTANCE**

(30) Priority: 04.06.2010 JP 2010129442
(71) Applicant: Kureha Corporation, Chuo-ku Tokyo 103-8552 (JP)
(72) Inventor: SATO Hiroyuki, Tokyo 103-8552 (JP); ONO Toshihiko, Tokyo 103-8552 (JP); ARASAKI Moriaki, Tokyo 103-8552 (JP)
(74) Representative: HOFFMANN EITLE
(86) International application number: PCT/JP2011/061270
(87) International publication number: WO 2011/152199

(57) **Abstract**

A resin composition containing polyglycolic acid having a structure represented by a formula (1) 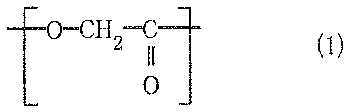 in a proportion of at least 70% by mol and a calcium-containing inorganic compound, preferably the carbonate, hydroxide or phosphate of calcium, and optionally containing a carboxyl group end-capping agent and further optionally a heat stabilizer.

## Description

### TECHNICAL FIELD

The present invention relates to a resin composition comprising polyglycolic acid as a main component, the hydrolytic resistance (water resistance) of which has been improved.

### BACKGROUND ART

Aliphatic polyesters such as polyglycolic acid and polylactic acid attract attention as biodegradable polymeric materials which impose little burden on an environment because they are degraded by microorganisms or enzymes present in the natural world such as soil and sea. The aliphatic polyesters are also utilized as medical polymeric materials for surgical sutures, artificial skins, etc. because they have degradability and absorbability *in vivo.*

Among the aliphatic polyesters, polyglycolic acid is excellent in gas barrier properties such as oxygen gas barrier property, carbon dioxide barrier property and water vapor barrier property and aroma barrier property and also excellent in heat resistance and mechanical strength, and so its uses have been developed either singly or in the form of a composite with other resin materials in fields of packaging materials and the like.

However, the aliphatic polyesters including polyglycolic acid are generally hydrolyzable and thus involve a problem that barrier properties and strength are lowered upon their hydrolyses. Therefore, when molded or formed products of the aliphatic polyesters including polyglycolic acid are exposed to a relatively severe environment of particularly a high temperature and a high humidity, the polyesters are hydrolyzed, and scission of each polymer chain occurs, and so a molecular weight is lowered in a relatively short period of time. In particular, the hydrolyzability of polyglycolic acid is strong, and so countermeasure has been required.

In order to suppress the function of a carboxyl group end acting as an acid catalyst upon hydrolysis for the aliphatic polyesters including polyglycolic acid, it has heretofore been attempted to improve hydrolytic resistance (hereinafter may be referred to as "water resistance") by incorporating a carboxyl group end-capping agent (hereinafter may be referred to as "end-capping agent" merely) including a carbodiimide compound (for example, Patent Literatures 1 and 2). However, when the carboxyl group end-capping agent such as a carbodiimide compound is incorporated into polyglycolic acid, scission of a molecular chain or lowering of a molecular weight may occur during molding or forming in some cases due to heat or the like incurred upon melt molding or forming, and so improvement has been required.

On the other hand, it has been known to improve thermal decomposition and hydrolysis characteristics by incorporating an acid component neutralizing agent such as an alkaline earth metal compound into a thermoplastic polyester resin composition, and Patent Literature 3 discloses a composition comprising a thermoplastic polyester resin, a phosphonate or diphosphinate, an acid component neutralizing agent and a polyhydric alcohol compound.

However, a water resistance improver that can sufficiently suppress the hydrolyzability of polyglycolic acid that is a biodegradable polymeric material has not been known.

### CITATION LIST

### PATENT LITERATURE

Patent Literature 1: Japanese Patent Application Laid-Open No. 11-80522 (corresponding to US Patent No. 5,973,024 and EP 0890604 A1)
Patent Literature 2: WO 2007/060981 A1 (corresponding to US 2009/0298979 A1 and EP 1958976 A1)
Patent Literature 3: Japanese Patent Application Laid-Open No. 2010-37375

### SUMMARY OF INVENTION

### TECHNICAL PROBLEM

It is a principal object of the present invention to provide a resin composition containing polyglycolic acid improved in water resistance by a method different from incorporation of a conventional carboxyl group end-capping agent.

### SOLUTION TO PROBLEM

The present inventors have carried out researches with a toward achieving the above object. As a result, it has been found that the water resistance of polyglycolic acid can be improved by incorporating a calcium-containing inorganic compound as a water resistance improver.

That is, according to the present invention, there is provided a resin composition comprising polyglycolic acid having a structure represented by a formula (1)

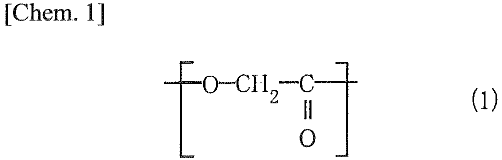

in a proportion of at least 70% by mol and a calcium-containing inorganic compound.

According to the present invention, there are also provided the following embodiments.
(1) The resin composition described above, wherein the calcium-containing inorganic compound is the carbonate, hydroxide or phosphate of calcium, preferably calcium carbonate or tricalcium phosphate.
(2) The resin composition described above, which comprises the calcium-containing inorganic compound in a proportion of 50 to 10,000 ppm to the polyglycolic acid.
(3) The resin composition described above, which further comprises a carboxyl group end-capping agent, preferably a carbodiimide compound.
(4) The resin composition described above, which further comprises a heat stabilizer.

### ADVANTAGEOUS EFFECTS OF INVENTION

In the present invention, the resin composition comprising the polyglycolic acid having the structure represented by the formula (1) in the proportion of at least 70% by mol and the calcium-containing inorganic compound as a water resistance improver is provided, whereby the hydrolytic resistance of the polyglycolic acid can be greatly improved without needing to add a conventional carboxyl group end-capping agent.

### DESCRIPTION OF EMBODIMENTS

Polyglycolic acid making up the resin composition according to the present invention and having a structure represented by the following formula (1) in a proportion of at least 70% by mol is a polymer produced from glycolic acid or glycolide (GL) that is a bimolecular cyclic ester of glycolic acid.

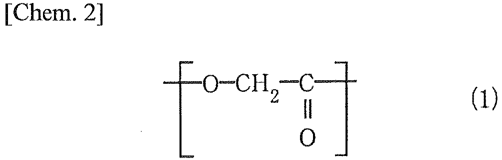

The content of the repeating unit represented by the above formula in the polyglycolic acid is at least 70% by mol, preferably at least 80% by mol, more preferably at least 90% by mol, still more preferably at least 95% by mol, particularly preferably at least 98% by mol, most preferably at least 99% by mol, that is, the polyglycolic acid is substantially a PGA homopolymer. If the content of the repeating unit represented by the above formula is too low, the gas barrier properties, heat resistance and mechanical strength of such a polyglycolic acid are lowered.

The polyglycolic acid may be provided as a glycolic acid copolymer by causing a polymer unit of a comonomer copolymerizable with glycolic acid to be contained in an amount of less than 30% by mol, preferably less than 20% by mol, more preferably less than 10% by mol, still more preferably less than 5% by mol, particularly preferably less than 2% by mol, most preferably less than 1% by mol in addition to the glycolic acid unit represented by the formula (1). However, such a copolymerizable comonomer may not be contained.

As such a comonomer, may be used an aliphatic ester monomer, such as a cyclic monomer such as ethylene oxalate (i.e., 1,4-dioxane-2,3-dione), a lactide, a lactone (for example, β-propiolactone, β-butyrolactone, pivalolactone, γ-butyrolactone, δ-valerolactone, β-methyl-δ-valerolactone or ε-caprolactone), a carbonate (for example, trimethylene carbonate), an ether (for example, 1,3-dioxane), an ether ester (for example, dioxanone), or an amide (for example, ε-caprolactam); a hydroxycarboxylic acid such as lactic acid, 3-hydroxypropanoic acid, 4-hydroxybutanoic acid or 6-hydroxycaproic acid, or an alkyl ester thereof; or a substantially equimolar mixture of an aliphatic diol such as ethylene glycol or 1,4-butanediol and an aliphatic carboxylic acid such as succinic acid or adipic acid or an alkyl ester thereof. An α-hydroxycarboxylic acid, particularly, lactic acid (or a lactide thereof) is preferably used.

The melt viscosity of the polyglycolic acid used in the present invention is within a range of preferably from 1 to 10,000 Pa·s, more preferably from 10 to 8,000 Pa·s, particularly preferably from 100 to 5,000 Pa·s as measured under conditions of a temperature of 270°C and a shear rate of 100 sec⁻¹.

In the present invention, the calcium-containing inorganic compound that is a water resistance improver is incorporated into the polyglycolic acid. In the present invention, "the water resistance improver" means a compounding additive that can suppress the hydrolysis of the polyglycolic acid, and the effect thereof can be confirmed by the fact that lowering of the weight average molecular weight Mw of the polyglycolic acid when melt molding or forming is conducted is small, and lowering of the weight average molecular weight Mw under a high-temperature and high-humidity environment is moderate. In addition, the fact that the amount of glycolide remaining in the polyglycolic acid is small, and the concentration of a terminal COOH in the polyglycolic acid is low also contributes to the hydrolytic resistance.

In the present invention, examples of the calcium-containing inorganic compound that is the water resistance improver include a hydroxide, an oxide, a carbonate, a sulfate and inorganic acid salts such as a phosphate, of calcium. Such calcium-containing inorganic compounds may be used either singly or in any combination thereof. A hydroxyapatite such as tricalcium phosphate ([Ca₃(PO₄)₂]₃·Ca(OH)₂) may also be used. In particular, the carbonate, hydroxide or phosphate of calcium is preferred, and calcium carbonate, calcium hydroxide, calcium hydrogenphosphate or a hydroxyapatite is preferred. Among these, calcium carbonate or the hydroxyapatite such as tricalcium phosphate ([Ca₃(PO₄)₂]₃·Ca(OH)₂) exhibits a markedly high effect to improve the water resistance. As the above calcium carbonate, are known colloidal calcium carbonate, light calcium carbonate, heavy calcium carbonate, wet grinding fine heavy calcium carbonate and wet grinding heavy calcium carbonate (chalk), and all of them may be used in the present invention. Calcium carbonate may be in the form of powder, plate or fiber. However, calcium carbonate is preferably used in the form of powder having a particle size of 10 µm or less from the viewpoint of dispersibility. The particle size is preferably finer because the effect to improve the hydrolytic resistance becomes great.

These calcium-containing inorganic compounds that are water resistance improvers may be used in a proportion of generally 0.001 to 2.0 parts by mass (10 to 20,000 ppm), preferably 0.005 to 1.0 parts by mass (50 to 10,000 ppm), more preferably 0.01 to 0.5 parts by mass (100 to 5,000 ppm), particularly preferably 0.015 to 0.3 parts by mass (150 to 3,000 ppm), most preferably 0.02 to 0.2 parts by mass (200 to 2,000 ppm) per 100 parts by mass of the polyglycolic acid. The fact that the calcium-containing inorganic compounds that are water resistance improvers used in the present invention can improve the water resistance of the polyglycolic acid in such an extremely small used amount is an unexpectable effect. If the amount used is too small, the water resistance-improving effect by the addition becomes poor. If the amount used is too large, there is a tendency to deteriorate the molding or forming ability of the resulting resin composition due to the lubricating effect thereof, and there is also a possibility that a working environment may be impaired by generation of gas.

Since the polyglycolic acid-containing resin composition according to the present invention is improved in hydrolytic resistance by adding the calcium-containing inorganic compound that is the water resistance improver, the carboxyl group end-capping agent heretofore used may not be used. However, the carboxyl group end-capping agent is preferably used in combination when higher water resistance is required.

As the carboxyl group end-capping agent, may be used that having a carboxyl group end-capping function and generally known as a water resistance improver for aliphatic polyesters such as polylactic acid. Examples thereof include carbodiimide compounds including monocarbodiimide compounds such as N,N-2,6-diisopropylphenyl-carbodiimide and polycarbodiimide compounds; oxazoline compounds such as 2,2'-m-phenylenebis(2-oxazoline), 2,2'-p-phenylenebis(2-oxazoline), 2-phenyl-2-oxazoline, and styrene-isopropenyl-2-oxazoline; oxazine compounds such as 2-methoxy-5,6-dihydro-4H-1,3-oxazine; and epoxy compounds such as N-glycidylphthalimide and cyclohexene oxide.

Among these, carbodiimide compounds are preferred, and all of aromatic, alicyclic and aliphatic compounds may be used. However, aromatic carbodiimide compounds are particularly preferred. In particular, a compound high in purity imparts a good water resistance stabilizing effect.

These carboxyl group end-capping agents may be used in combination of two or more compounds as needed and may be preferably incorporated in a proportion of 0.01 to 10 parts by mass, more preferably 0.05 to 2.5 parts by mass, particularly preferably 0.1 to 1.8 parts by mass per 100 parts by mass of the polyglycolic acid. If the amount incorporated is further increased, improvement in the effect according to the increase is little, and the resulting resin composition tends to be colored more and more. If the amount incorporated is too small, the effect to improve the water resistance becomes poor.

In the resin composition according to the present invention, a heat stabilizer may be further incorporated in addition to the calcium-containing inorganic compound that is the water resistance improver and the carboxyl group end-capping agent added if desired. The heat stabilizer may be incorporated in a proportion of preferably at most 5 parts by mass, more preferably 0.003 to 3 parts by mass, still more preferably 0.01 to 2 parts by mass, particularly preferably 0.02 to 1.5 parts by mass per 100 parts by mass of the polyglycolic acid. As the heat stabilizer, is preferably used a phosphate having a pentaerythritol skeleton structure, a phosphorus compound having at least one hydroxyl group and at least one long-chain alkyl ester group or a heavy metal deactivator. As preferred heat stabilizers, specific examples of the phosphate having the pentaerythritol skeleton structure include cyclic neopentanetetraylbis(2,6-di-tert-butyl-4-methylphenyl)-phosphite, cyclic neopentanetetraylbis(2,4-di-tert-butylphenyl)phosphite, bis(monononylphenyl)pentaerythritol diphosphite and bis(4-octadecylphenyl)-pentaerythritol diphosphite. Among phosphorus-based compounds, phosphorus compounds having at least one hydroxyl group and at least one long-chain alkyl ester group are preferred. The number of carbon atoms in the long-chain alkyl is preferably within a range of 8 to 24. Specific examples of such phosphorus compounds include mono- or di-stearyl acid phosphate, and mixed esters (about 50 mol% of monostearyl phosphate and about 50 mol% of distearyl phosphate; ADEKA STAB AX-71, product of ADEKA CORPORATION) of stearyl phosphate are known. When these carboxyl group end-capping agent and heat stabilizer are incorporated, the resulting aliphatic polyester is prevented from being colored upon melt processing, and a synergistic effect is achieved from the viewpoint of suppressing hydrolysis.

When the calcium-containing inorganic compound that is the water resistance improver, the carboxyl group end-capping agent and the heat stabilizer are incorporated into the polyglycolic acid, these components are preferably melted and kneaded by means of an extruder. A polyglycolic acid resin composition uniformly improved in water resistance is thereby obtained. It is particularly preferred to conduct melting and kneading at a temperature of 200 to 300°C by means of a twin-screw extruder.

In order to improve other properties, other additives such as a catalyst deactivator, a plasticizer, a heat ray absorber, an ultraviolet ray absorber and a pigment may be added in a proportion of, for example, 0.001 to 5 parts by mass per 100 parts by mass of the polyglycolic acid to the resin composition according to the present invention, as needed, in addition to the above-described components added for mainly improving the water resistance and heat resistance. These additives are also preferably melted and kneaded with the polyglycolic acid together with the calcium-containing inorganic compound that is the water resistance improver and the carboxyl group end-capping agent by means of the extruder.

The resin composition containing the polyglycolic acid of the present invention is formed or molded into a form of a film or sheet, a filament, a blow-molded container, a lid, a bag-like container, a cylindrical packaging material or the like by itself, or as a mixture (preferably containing at least 90% by mass of the polyglycolic acid) with another thermoplastic resin or a composite such as a laminate. The film or sheet is further processed to form a cup, tray, bag-like container or the like.

Examples of another thermoplastic resin include polyolefin resins, thermoplastic polyester resins (particularly, aliphatic polyester resins such as polylactic acid), polystyrene resins, polyvinyl chloride resins, polyamide resins, polycarbonate resins, cycloolefin resins, polyurethane resins, polyvinylidene chloride resins, and ethylene-vinyl alcohol copolymers (EVOH). These resins are mixed within the limits not impairing the desired properties of the resulting molded or formed product.

In the laminate, the resin composition containing the polyglycolic acid of the present invention is preferably arranged as an intermediate layer between other layers. In order to enhance delamination resistance, an adhesive resin layer may be further caused to intervene between respective layers. An adhesive resin (also referred to as "an adhesive" merely) can preferably be subjected to melt processing such as extrusion and exhibits good adhesion property to each layer.

As examples of the adhesive resin, may be mentioned a maleic anhydride-modified polyolefin resin (MODIC (trademark) S525, product of Mitsubishi Chemical Corporation); resin compositions comprising a carboxyl-modified polyolefin as a main component and containing the carboxyl-modified polyolefin and an epoxidized polyolefin, for example, glycidyl group-containing ethylene copolymers (REXPEARL (trademark) RA3150, product of Nippon Petrochemicals Co., Ltd., and BOND-FAST (trademark) 2C, E and B, products of Sumitomo Chemical Co., Ltd.); a thermoplastic polyurethane (KURAMIRON (trademark) 1195L, product of Kuraray Co., Ltd.); a polyamide ionomer (AM7926, product of Du Pont-Mitsui Polychemicals Co., Ltd.); a polyacrylimide resin (XHTA, product of Rohm and Haas Co.); and ADMER (trademark) NF550 [acid-modified linear low density polyethylene, MFR = 6.2 g/10 min (temperature: 190°C, load: 2,160 gf), product of Mitsui Chemicals, Inc.].

When a sheet or film is formed from the resin composition containing the polyglycolic acid of the present invention, the sheet or film is uniaxially, or simultaneously or sequentially biaxially stretched to enhance the degree of orientation thereof, whereby its properties such as gas barrier properties and mechanical properties can be improved. Upon the stretching, it is important to properly set conditions. A stretching temperature is preferably 100°C or lower, more preferably lower than 80°C, particularly preferably 45 to 65°C. In case of the sequentially biaxial stretching, stretching temperature in both directions may be varied. In such a case, a stretching temperature in a crosswise direction is preferably higher. A draw ratio is preferably 1.1 to 5.0 times, more preferably 2 to 4 times in each direction of uniaxial (longitudinal) and biaxial (longitudinal and crosswise) directions. After the stretching process, it is preferred that a formed product stretched is held for 10 seconds to 20 minutes at 100 to 200°C to conduct a heat treatment in that the dimension stability, heat resistance and gas barrier properties of the formed product are more improved.

The thus-obtained stretched or unstretched formed product of the polyglycolic acid of a single layer or in a state laminated with another thermoplastic resin may also be further extruded or laminated with another thermoplastic resin layer by using an adhesive as needed.

When a closed-end multilayer preform obtained by using the resin composition obtained in the present invention and containing the polyglycolic acid excellent in water resistance as an intermediate layer and laminating it with an aromatic polyester such as PET is subjected to stretch blow molding in a mold, a bottle excellent in water resistance and also excellent in properties such as gas barrier properties and mechanical properties can be molded. The closed-end multilayer preform generally has a thickness of 1 to 10 mm. Upon stretching, it is important to properly set conditions. No particular limitation is imposed on a heat source, and IR (infrared rays), hot air, a heat medium bath, electromagnetic waves or the like may be used like other molding processings. However, the preform is generally preheated by an IR (infrared) heating unit, then immediately transferred to a mold and blow-molded while conducting stretching by compressed air from an opening portion within the mold. In addition to the compressed air, stretching by a rod may also be simultaneously conducted. The surface temperature of the multilayer preform is raised to preferably 80 to 200°C, more preferably 85 to 150°C, particularly preferably 90 to 120°C by heating. When the stretching is conducted after the multilayer preform is crystallized by the heating to control the haze value thereof to preferably 40% or high, a transparent molded produce is easy to obtain. After the stretch molding, a post treatment such as heat setting, lamination for providing an additional resin layer and a post processing such as coating may also be conducted as needed. A treatment temperature for the heat setting is preferably 40 to 210°C, more preferably a temperature not higher than the melting point of the polyglycolic acid resin, still more preferably a temperature lower by 20°C to 120°C than the melting point. The lamination includes wet lamination, dry lamination, extrusion lamination, hot-melt lamination and non-solvent lamination.

### EXAMPLES

The resin composition according to the present invention will hereinafter be specifically described by the following Examples and Comparative Examples. However, the present invention is not limited to these examples alone. In the following description, "parts" or "part", "%" and "ppm" are based on mass unless expressly noted.

The properties of the polyglycolic acid or resin composition according to the present invention were measured according to the following respective methods.

### [Content of glycolide]

The content of glycolide (GL) was measured by adding 2 mL of dimethyl sulfoxide containing an internal standard substance, 4-chlorobenzophenone, at a concentration of 0.2 g/L to about 100 mg of each sample, heating the resultant mixture for about 5 minutes at 150°C to dissolve the sample, cooling the resultant solution to room temperature, then conducting filtration, taking out 1 µL of a filtrate thereof and charging the filtrate into a gas chromatograph (GC). The content of glycolide was calculated out as % by mass contained in a polymer from a numeral value obtained by this measurement. Measuring conditions of the GC analysis are as follows. The content of glycolide is preferably at most 0.1%, more preferably at most 0.07% from the viewpoint of practical use.

### <GC measurement conditions>

Apparatus: "GC-2010" manufactured by Shimadzu Corporation.
Column: TC-17 (0.25 mm in diameter x 30 m).
Column temperature: After retained at 150°C for 5 minutes, raising the temperature to 270°C at a heating rate of 20°C/min and holding at 270°C for 3 minutes.
Temperature of vaporizing chamber: 180°C.
Detector: FID (hydrogen flame ionization detector), temperature: 300°C.

### [Carboxylic acid concentration]

10 mL of analytical grade dimethyl sulfoxide were added to about 0.2 g of each sample to completely dissolve the sample over about 3 minutes in an oil bath at 150°C. After cooling, 30 µL of an about 0.1% Bromothymol Blue/dimethyl sulfoxide solution was added to the resultant solution, and 0.001N 1,8-diazabicyclo[5.4.0]undeca-7-ene was then gradually added to regard a point that b value had not been changed by a colorimeter and color-difference meter ("CR-400", manufactured by Konica Minolta Sensing, Inc.) as an end point. A carboxylic acid concentration was calculated out as an equivalent (eq/t) per ton of PGA from the amount added dropwise at that time. It is necessary from the viewpoint of practical use that the concentration is at most 10 eq/t, preferably at most 2.5 eq/t.

### [weight average molecular weight]

Measurement of a weight average molecular weight was conducted according to the following method. About 10 mg of each sample is completely dissolve in 0.5 mL of analytical grade dimethyl sulfoxide in an oil bath at 150°C. This solution is cooled with cold water and diluted in a measuring cylinder to 10 mL with hexafluoroisopropanol (HFIP) in which 5 mM of sodium trifluoroacetate has been dissolved. After that solution is filtered through a polytetrafluoroethylene(PTFE)-made membrane filter having a pore size of 0.1 µm, the resultant filtrate is charged into a gel permeation chromatography (GPC) analyzer to measure a weight average molecular weight (Mw). Incidentally, the sample was charged into the GPC analyzer within 30 minutes after dissolved.

### <GPC measurement conditions>

Apparatus: "Shodex-104" manufactured by Showa Denko K. K.
Column: Two HFIP-606M columns were connected in series with one HFIP-G column as a pre-column.
Column temperature: 40°C.
Eluent: HFIP solution in which 5 mM of sodium trifluoroacetate has been dissolved. Flow rate: 0.6 mL/min.
Detector: RI (differential refractive index detector).
Molecular weight calibration: Seven kinds of standard polymethyl methacrylate that are different in molecular weight from one another were used.

### [Evaluation of water resistance]

Water resistance was evaluated by holding respective samples in a thermohygrostat maintained to a temperature of 50°C and a relative humidity of 90%, and periodically taking each sample out of the thermohygrostat to conduct GPC measurement for the sample, thereby calculating out a time (unit: hr) (hereinafter, the time (unit: hr) may be referred to as "Mw 70,000 time") required until the weight average molecular weight (Mw) reaches 70,000 from the resultant change curve with time of the weight average molecular weight.

### [Production process of PGA pellet]

100 parts by mass of PGA (product of Kureha Corporation, melt viscosity: 1,200 Pa·s as measured at a temperature of 270°C and a shear rate of 100 sec⁻¹) to which 0.02 parts by mass (200 ppm) of a substantially equimolar mixture (trade name "ADEKA STAB (trademark) AX-71 ", product of ADEKA CORPORATION; hereinafter abbreviated as "AX-71 ") of monostearyl phosphate and distearyl phosphate had been added as a heat stabilizer was extruded by means of an extruder to obtain PGA pellets (the PGA pellets are hereinafter referred to as "end-uncapped PGA").

PGA to which 0.3 parts by mass of N,N-2,6-diisopropylphenylcarbodiimide (product of Kawaguchi Chemical Industry Co., Ltd.) was further added as a carboxyl group end-capping agent in addition to AX-71 was extruded by means of an extruder to obtain COOH end-capped PGA pellets (the PGA pellets are hereinafter referred to as "end-capped PGA"). Both end-uncapped PGA and end-capped PGA pellets were subjected to a heat treatment at 180°C under a nitrogen atmosphere to remove residual monomers. These pellets were used in the following Examples.

<Extrusion conditions>
Extrusion conditions of the PGA pellets were as follows.
Extruder: "LABO PLASTOMILL LT-20" manufactured by Toyo Seiki Co., Ltd. Temperature setting conditions: Regarding zones C1 to C3 successively provided from a feed portion to a discharge portion and a die, the temperatures were set to 200°C, 230°C, 240°C and 220°C, respectively.

### [Example 1]

Into 100 parts by mass of the end-uncapped PGA pellets, was added 0.1 parts by mass (1,000 ppm) of calcium carbonate (Brilliant (trademark) 1500, product of Shiraishi Kogyo Kaisha, Ltd.; hereinafter referred to as "CaCO₃" merely), and the resultant mixture was melted and kneaded by means of an extruder. The resultant kneaded product was sandwiched between aluminum plates and heated for 3 minutes on a hot press of 280°C. Thereafter, the thus-heated product was pressed at 5 MPa, held for 30 seconds, then immediately transferred to a circulating-water-cooling press and cooled to prepare a non-crystalline pressed sheet. The pressed sheet prepared by the above-described process was subjected to a heat treatment at 80°C for 30 minutes to obtain a crystalline unstretched sheet.

### [Example 2]

Into the end-capped PGA pellets, was added 1,000 ppm of CaCO₃, and the resultant mixture was melted and kneaded by means of an extruder. Hereinafter, the same process as in Example 1 was conducted to obtain a crystalline unstretched sheet.

### [Example 3]

The same process as in Example 2 except that the amount of CaCO₃ added was changed to 300 ppm was conducted.

### [Comparative Example 1]

The same process as in Example 1 except that no CaCO₃ was added to the end-uncapped PGA pellets was conducted to obtain a crystalline unstretched sheet.

The properties of samples respectively collected from the crystalline unstretched sheets obtained in Examples 1 to 3 and Comparative Example 1 were determined. The results were as shown in the following Table 1.

**[Table 1]**

| | PGA | Compounding additive | Amount added (ppm) | Content of GL (%) | Carboxylic acid concentration (eq/t) | Initial Mw (x 10000) | Mw 70,000 time (hr) |
|---|---|---|---|---|---|---|---|
| Example 1 | End-uncapped PGA | CaCO₃ | 1000 | 0.03 | 8.1 | 20.4 | 78 |
| Example 2 | End-capped PGA | CaCO₃ | 1000 | 0.07 | 2.1 | 18.6 | 134 |
| Example 3 | End-capped PGA | CaCO₃ | 300 | 0.03 | 1.7 | 18.4 | 118 |
| Comparative Example 1 | End-uncapped PGA | - | - | 0.02 | 8.0 | 20.2 | 66 |

When Example 1 is compared with Comparative Example 1, the time required until Mw reaches 70,000 is lengthened to longer than 72 hr by incorporating calcium carbonate that is a water resistance improver. It is thus understood that the water resistance was improved without using a conventionally known end-capping agent. In addition, as apparent from the results of Example 2, the water resistance could be more improved by using the conventionally known end-capping agent in combination. Further, as apparent from the results of Example 3, when calcium carbonate that is the water resistance improver was used in combination with the end-capping agent, excellent water resistance could be realized even when the amount of calcium carbonate incorporated was reduced to 300 ppm.

### [Example 4]

The same process as in Example 2 except that 300 ppm of calcium hydroxide (product of Wako Pure Chemical Industries, Ltd.; hereinafter referred to as "Ca(OH)₂") was added in place of CaCO₃ was conducted to obtain a crystalline unstretched sheet.

### [Example 5]

The same process as in Example 2 except that 300 ppm of tricalcium phosphate ([Ca₃(PO₄)₂]₃·Ca(OH)₂, product of Wako Pure Chemical Industries, Ltd.) was added in place of CaCO₃ was conducted to obtain a crystalline unstretched sheet.

### [Example 6]

The same process as in Example 2 except that 300 ppm of calcium hydrogenphosphate (product of Wako Pure Chemical Industries, Ltd.; hereinafter referred to as "CaHPO₄") was added in place of CaCO₃ was conducted to obtain a crystalline unstretched sheet.

### [Comparative Example 2]

The same process as in Example 2 except that 1,000 ppm of zinc carbonate (product of Wako Pure Chemical Industries, Ltd.; hereinafter referred to as "ZnCO₃") was added in place of CaCO₃ was conducted to obtain a crystalline unstretched sheet.

### [Comparative Example 3]

The same process as in Example 2 except that 1,000 ppm of zinc oxide (product of Wako Pure Chemical Industries, Ltd.; hereinafter referred to as "ZnO") was added in place of CaCO₃ was conducted to obtain a crystalline unstretched sheet.

### [Comparative Example 4]

The same process as in Example 2 except that 1,000 ppm of magnesium oxide (STARMAG P, product of Konoshima Chemical Co., Ltd.; hereinafter referred to as "MgO") was added in place of CaCO₃ was conducted to obtain a crystalline unstretched sheet.

### [Comparative Example 5]

The same process as in Example 2 except that 300 ppm of sodium dihydrogenphosphate (product of Wako Pure Chemical Industries, Ltd.; hereinafter referred to as "NaH₂PO₄" was added in place of CaCO₃ was conducted to obtain a crystalline unstretched sheet.

### [Comparative Example 6]

The same process as in Example 2 except that 300 ppm of potassium dihydrogenphosphate (product of Wako Pure Chemical Industries, Ltd.; hereinafter referred to as "KH₂PO₄") was added in place of CaCO₃ was conducted to obtain a crystalline unstretched sheet.

The properties of samples respectively collected from the crystalline unstretched sheets obtained in Examples 4 to 6 and Comparative Examples 2 to 6 were determined.

**[Table 2]**

| | PGA | Compounding additive | Amount added (ppm) | Content of GL (%) | Carboxylic acid concentration (eq/t) | Initial Mw (x 10000) | Mw 70,000 time (hr) |
|---|---|---|---|---|---|---|---|
| Example 4 | End-capped PGA | Ca(OH)₂ | 300 | 0.03 | 2.6 | 16.7 | 103 |
| Example 5 | End-capped PGA | [Ca₃(PO₄)₂]₃· Ca(OH)₂ | 300 | 0.04 | 2.0 | 18.8 | 124 |
| Example 6 | End-capped PGA | CaHPO₄ | 300 | 0.04 | 2.7 | 18.1 | 118 |
| Comparative Example 2 | End-capped PGA | ZnCO₃ | 1000 | 1.51 | 20.0 | 8.9 | 22 |
| Comparative Example 3 | End-capped PGA | ZnO | 1000 | 0.48 | 2.5 | 14.9 | 43 |
| Comparative Example 4 | End-capped PGA | MgO | 1000 | 0.29 | 2.4 | 15.8 | 47 |
| Comparative Example 5 | End-capped PGA | NaH₂PO₄ | 300 | 0.03 | 2.9 | 18.5 | 72 |
| Comparative Example 6 | End-capped PGA | KH₂PO₄ | 300 | 0.04 | 2.6 | 17.6 | 72 |

It was found from the results of Examples 4 to 6 that other calcium-containing inorganic compounds than calcium carbonate also exhibit the water resistance-improving effect. In particular, it was found from the results of Examples 5 and 6 that when the phosphate of calcium such as [Ca₃(PO₄)₂]₃·Ca(OH)₂ that is a hydroxyapatite, or calcium hydrogenphosphate is used, the initial weight average molecular weight becomes high, and an excellent water resistance-improving effect is achieved.

On the other hand, it was found from the result of Comparative Example 4 that when a compound of magnesium which belongs to alkaline earth metals like calcium is used, the water resistance is deteriorated even when the amount incorporated is increased, and the end-capping agent is used in combination. It was also found from the results of Comparative Examples 2 and 3 that zinc compounds also deteriorate the water resistance even when the amount incorporated is increased, and the end-capping agent is used in combination. It was further found from the results of Comparative Examples 5 and 6 that when the phosphates of alkali metals are used, marked improvement of water resistance is not observed even when the end-capping agent is used in combination. Incidentally, in Comparative Example 6, coloring is observed on the sample, and this is considered to be attributable to the fact that the sample of PGA has undergone any crystalline state change or thermal state change due to the alkali metal salt.

### INDUSTRIAL APPLICABILITY

As described above, the calcium-containing inorganic compound is incorporated into polyglycolic acid, and the carboxyl group end-capping agent and the heat stabilizer which is added as needed are further incorporated in addition to this compound, whereby a resin composition containing a polyglycolic acid improved in water resistance can be obtained, so that it can be expected that the applicable field of the polyglycolic acid which imposes little burden on the environment is widened.

## Claims

1. A resin composition comprising polyglycolic acid having a structure represented by a formula (1) 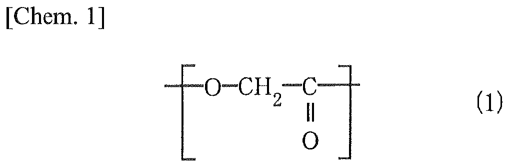 in a proportion of at least 70% by mol and a calcium-containing inorganic compound.

2. The resin composition according to claim 1, wherein the calcium-containing inorganic compound is the carbonate, hydroxide or phosphate of calcium.

3. The resin composition according to claim 2, wherein the calcium-containing inorganic compound is calcium carbonate or tricalcium phosphate ([Ca₃(PO₄)₂]₃·Ca(OH)₂).

4. The resin composition according to any one of claims 1 to 3, which comprises the calcium-containing inorganic compound in a proportion of 50 to 10,000 ppm to the polyglycolic acid.

5. The resin composition according to claim 1, which further comprises a carboxyl group end-capping agent.

6. The resin composition according to claim 5, wherein the carboxyl group end-capping agent is a carbodiimide compound.

7. The resin composition according to claim 1, which further comprises a heat stabilizer.
